# EUROPEAN PATENT APPLICATION

(11) **EP 4 800 845 A1**
(43) Date of publication of application: **02.09.2026**
(21) Application number: 26161421.8
(22) Date of filing: 27.02.2026
(51) Int. Cl.: H01Q 21/28, H01Q 1/22, H01Q 5/371, H01Q 9/22, H01Q 21/06

(54) **ANTENNA SWITCHING CIRCUIT**

(30) Priority: 27.02.2025 CN 202510228566
(71) Applicant: TP-Link Systems Inc., Irvine, California 92618 (US)
(72) Inventor: Xie, Jing, Shenzhen, 518000 (CN); Yu, Sunli, Shenzhen, 518000 (CN); Wei, Houde, Shenzhen, 518000 (CN)
(74) Representative: Marks & Clerk LLP

(57) **Abstract**

The present disclosure discloses an antenna switching circuit, including: a built-in antenna connected to a first port of an antenna switching unit; and an external antenna interface connected to a second port of the antenna switching unit, wherein the external antenna interface is used for linking an external antenna, and the external antenna has a ground point and a feed point between which a direct current loop is formed; the antenna switching unit configured to communicate with one of the built-in antenna and the external antenna under the control of different control signals. The solution provided by the present disclosure can improve the convenience and accuracy of antenna switching.

## Description

### CROSS-REFERENCE TO RELATED APPLICATIONS

This Application claims priority of Chinese application No. 202510228566.8, filed February 28, 2025, the entire contents of which are incorporated by reference their entireties.

### TECHNICAL FIELD

The present disclosure relates to the field of antenna technology, and in particular relates to an antenna switching circuit.

### BACKGROUND

In the development of wireless network products, antennas play a crucial role. Traditional routing generally uses external antennas, which have advantages including a good directivity and a large gain and can bring to users a good wireless network experience. However, with the change of consumer aesthetic concepts, products with simple appearance and smooth lines without external antennas have been favored in recent years, and built-in antennas have emerged as the times require. However, the built-in antennas are limited by factors such as product size, placement and insufficient clearance area design, so their performance is often inferior to external antennas in terms of the out-of-roundness for directivity and of the gain, resulting in unsatisfactory user experience.

To solve this problem, two sets of antennas are attempted to be designed in some products, for the users to choose from, so that accessories of an external antenna can be inserted to improve wireless network coverage when better coverage is required. Methods for switching antenna configurations in related technologies include: the first method in which the users are required to manually select configurations on a web page or APP, which is cumbersome in operation; the second method in which an antenna module is bounded to other modules and USBs or other interfaces are used to identify the insertion and removal state of the antenna, which is costly; and the third method in which a mechanical identification mechanism is used and structures such as spring pieces are designed on a housing of an antenna interface, so that when the external antenna is inserted, the spring pieces deform to trigger a hardware switch. However, this mechanism of the third method lacks fool-proof design, which may lead to the degradation of accuracy and reliability of the identification and also brings additional complexity in design and manufacturing.

Therefore, the convenience and accuracy of the antenna switching solution in the related art are poor.

### SUMMARY

Embodiments of the present disclosure provide an implementation solution different from related art to solve the technical problems that the convenience and accuracy of the antenna switching solution in the related art are poor.

In a first aspect, the present disclosure provides an antenna switching circuit, including: a built-in antenna connected to a first port of an antenna switching unit; an external antenna interface connected to a second port of the antenna switching unit, wherein the external antenna interface is used for linking an external antenna, and the external antenna has a ground point and a feed point between which a direct-current loop is formed; and the antenna switching unit configured to communicate with one of the built-in antenna and the external antenna under the control of different control signals.

In some embodiments, the antenna switching unit is specifically configured to connect with the built-in antenna under the control of a high-level signal, and to connect with the external antenna under the control of a low-level signal.

In some embodiments, a type of the external antenna includes any one of: a dipole antenna, a monopole antenna, an inverted-F antenna, an antenna with a balun structure, a single antenna, and an array antenna of N units, N being an integer greater than 1.

In some embodiments, the external antenna is a dipole antenna of two units, for which at symmetrical positions of the external antenna, one unit is provided with the feeding point, and the other unit is provided with a short-circuit point at a corresponding position.

In some embodiments, the antenna switching circuit further includes: a control signal generating unit including a power supply and a resistor, wherein a first end of the resistor is connected to the power supply, and a second end of the resistor is respectively connected to a third port of the antenna switching unit and the external antenna interface, wherein the control signal generating unit is configured to input the different control signals to the antenna switching unit under different linking states of the external antenna.

In some embodiments, the circuit further includes a signal filtering unit, and the external antenna interface is connected to the second end of the resistor via the signal filtering unit.

In some embodiments, the signal filtering unit is a low-pass filter.

In some embodiments, the circuit further includes a direct-current isolation unit, and the external antenna interface is connected to the second port of the antenna switching unit through the direct-current isolation unit.

In some embodiments, the antenna switching unit is a radio frequency switch.

In a second aspect, the present disclosure also provides an antenna switching method, which is applied to an antenna switching unit in an antenna switching circuit, wherein the antenna switching circuit further includes a built-in antenna and an external antenna interface, the built-in antenna is connected to a first port of the antenna switching unit, the external antenna interface is connected to a second port of the antenna switching unit, the external antenna interface is used for linking an external antenna, the external antenna has a ground point and a feed point, and a direct-current loop is formed between the feed point and the ground point, and wherein the method includes: selecting one of the built-in antenna and the external antenna to connect in response to different control signals.

The antenna switching circuit provided by the present disclosure includes: a built-in antenna connected to a first port of an antenna switching unit; and an external antenna interface connected to a second port of the antenna switching unit, wherein the external antenna interface is used for linking an external antenna, and the external antenna has a ground point and a feed point between which a direct-current loop is formed; the antenna switching unit configured to connect with one of the built-in antenna and the external antenna under the control of different control signals. Since the direct-current loop is formed between the feeding point and the ground point of the external antenna, when the external antenna is linked, the direct-current loop connecting the feeding point and the ground point changes the potential distribution in the circuit. Therefore, different control signals are input to the antenna switching unit under different linking states of the external antenna, so that the antenna switching unit can automatically connect with the built-in antenna or the external antenna, in which the selection for antennas is realized through the control and switching of electrical signals, without manual switching by the users and without mechanical identification, thus achieving the technical effect of improving the convenience and accuracy of antenna switching.

### BRIEF DESCRIPTION OF DRAWINGS

In order to more clearly illustrate the embodiments of the present disclosure or the technical solutions in related art, the following will briefly introduce the drawings that need to be used in the description of the embodiments or related art. Obviously, the drawings in the following description are some embodiments of the present disclosure, and those of ordinary skill in the art can also obtain other drawings based on these drawings without exerting inventive efforts. In the drawings:
FIG. 1 is a first structural schematic diagram of an antenna switching circuit according to exemplary embodiments of the present disclosure;
FIG. 2 is a first structural schematic diagram of an external antenna according to embodiments of the present disclosure;
FIG. 3 is a second structural schematic diagram of an antenna switching circuit according to exemplary embodiments of the present disclosure;
FIG. 4 is a third structural schematic diagram of an antenna switching circuit according to exemplary embodiments of the present disclosure;
FIG. 5 is a fourth structural schematic diagram of an antenna switching circuit according to exemplary embodiments of the present disclosure;
FIG. 6 is a fifth structural schematic diagram of an antenna switching circuit according to exemplary embodiments of the present disclosure;
FIG. 7 is a second structural schematic diagram of an external antenna according to embodiments of the present disclosure;
FIG. 8 is a horizontal gain distribution diagram of a 2.45 GHz external antenna according to embodiments of the present disclosure;
FIG. 9 is a vertical gain distribution diagram of a 2.45 GHz external antenna according to embodiments of the present disclosure;
FIG. 10 is a horizontal gain distribution diagram of a 5.5 GHz external antenna according to embodiments of the present disclosure; and
FIG. 11 is a vertical gain distribution diagram of a 5.5 GHz external antenna according to embodiments of the present disclosure.

### DETAILED DESCRIPTION

Reference will now be made in detail to the embodiments of the present disclosure, examples of which are illustrated in the accompanying drawings. The embodiments described below with reference to the accompanying drawings are exemplary and intended to explain the present disclosure and should not be construed as limiting the present disclosure.

There exist two major problems in antenna switching technology in wireless network products of the related art. The first-type technical solution, that is, the method in which USBs or other interfaces are used to identify the insertion and removal of the antenna, requires additional interfaces and hardware support, resulting in an increase in the volume and cost of the antenna module, and is not suitable for passive external antennas. The second-type technical solution (that is, the method in which a mechanical identification is used and a hardware switch is triggered through structures such as spring pieces), although antenna switching is achieved to a certain extent, lacks a fool-proof design and is prone to misidentification due to the insertion of foreign objects or mismatched antennas, so the performance stability of wireless network devices may be influenced. Therefore, the convenience and accuracy of the antenna switching solutions in the related art are poor.

In order to solve the above technical problems, the present disclosure provides an antenna switching circuit to solve the technical problems of poor convenience and accuracy of the antenna switching solutions in related art.

The technical solution of the present disclosure and how the technical solution of the present disclosure solves the above technical problems will be described in detail below with specific embodiments. The following specific embodiments can be combined with each other, and the same or similar concepts or processes may not be described again in some embodiments. The embodiments of the present disclosure will be described below with reference to the accompanying drawings.

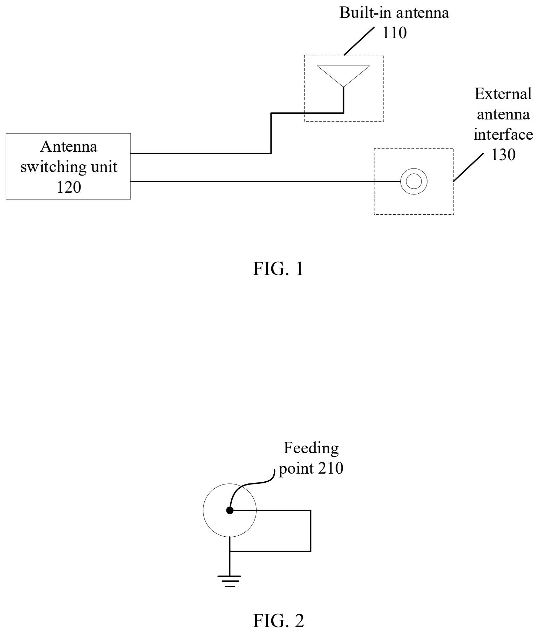

Please refer to FIG. 1, which is a first structural schematic diagram of an antenna switching circuit according to exemplary embodiments of the present disclosure. The antenna switching circuit at least includes: a built-in antenna 110 connected to a first port of an antenna switching unit 120; and an external antenna interface 130 connected to a second port of the antenna switching unit 120. The external antenna interface 130 is used for linking an external antenna.

Please refer to FIG. 2, which is a first structure schematic diagram of an external antenna according to embodiments of the present disclosure. The external antenna has a ground point and a feed point 210. A direct-current loop is formed between the feed point 210 and the ground point of the external antenna.

The antenna switching unit 120 is configured to connect with one of the built-in antenna 110 and the external antenna under the control of different control signals.

Specifically, when the external antenna is linked, the direct-current loop formed between its feed point and ground point will change the potential distribution in the circuit. This change in the potential distribution will generate different control signals and input them to the antenna switching unit 120. The antenna switching unit 120 automatically selects the built-in antenna 110 or the external antenna to connect based on these different control signals.

Analyzed from the perspective of the circuit structure, the antenna switching circuit provided by the embodiments of the present disclosure only relies on basic circuit elements (such as the antenna switching unit, the built-in antenna, the external antenna interface, etc.), and does not require complex logic circuits or additional control chips. Antenna switching unit 120 automatically switches according to potential changes without additional software or complex hardware design. The formation of the direct-current loop and the change in the potential distribution are physical phenomena. Therefore, the implementation is simple and reliable. When the external antenna is linked, the direct-current loop formed by the feeding point 210 and the ground point directly changes the potential distribution of the circuit to generate a control signal. The antenna switching unit 120 automatically selects the built-in antenna or the external antenna to connect according to the control signal. The entire process is completed by hardware without software participation, and the user does not need to make additional confirmation or setting on the software side, thereby realizing true plug and play.

From the perspective of fool-proof, the antenna switching circuit has excellent anti-mistake capability. Since the change in the control signal is caused by the direct-current loop formed by the feed point 210 and the ground point when the external antenna is linked, when a foreign object with a matched shape is inserted into the external antenna interface 130, the foreign object usually cannot form an effective direct-current loop similar to that of the external antenna. Therefore, the potential distribution of the circuit does not undergo the specific change as when the external antenna is linked, and thus the antenna switching unit 120 does not receive the same control signal as when the external antenna is linked. In this way, the antenna switching unit 120 will not mistakenly identify the foreign object as the external antenna and perform switching operations.

From the perspective of the antenna size, the external antenna only needs to have the feed point and the ground point and form the direct-current loop, and no additional circuits or components are required. The design of the antenna switching circuit is compact and does not increase the size of the external antenna module. The switching process is implemented based on hardware and has no impact on the signal transmission performance of the external antenna.

Therefore, the antenna switching circuit provided by the embodiments of the present disclosure enables the antenna switching unit 120 to automatically and accurately switch between the built-in antenna 110 and the external antenna, meeting the requirements for antenna performance in different scenarios.

In some embodiments, the antenna switching unit 120 connects with the built-in antenna 110 under the control of a high-level signal, and the antenna switching unit 120 connects with the external antenna under the control of a low-level signal.

The structure or type of the built-in antenna 110 can be set according to application scenarios, operating frequency bands, and space limitations. For example, for small mobile devices, a microstrip patch built-in antenna can be selected as the built-in antenna 110. The microstrip patch built-in antenna has the characteristics of small size and easy integration. For indoor access point devices requiring a high gain, an inverted-F type built-in antenna can be used as the built-in antenna 110.

The type of the external antenna interface 130 can be selected according to the type, usage environment, and convenience of connection of the external antenna. For example, in low-power and high-frequency application scenarios, the external antenna interface 130 can be set to an SMA (SubMiniature version A) interface, in medium and low frequency application scenarios, the external antenna interface 130 can be set to a BNC (Bayonet Neill-Concelman) interface, and in outdoor or professional devices, the external antenna interface 130 can be set to an N-type interface, etc.

In the present disclosure, external antenna connectors do not require special structural designs, and conventional connectors can be used, including but not limited to common radio frequency connectors such as SMA, I-PEX, SMB, TS-9, N-type, etc.

The antenna switching unit 120 can be designed according to factors such as an operating frequency range, insertion loss, isolation, switching speed, and cost.

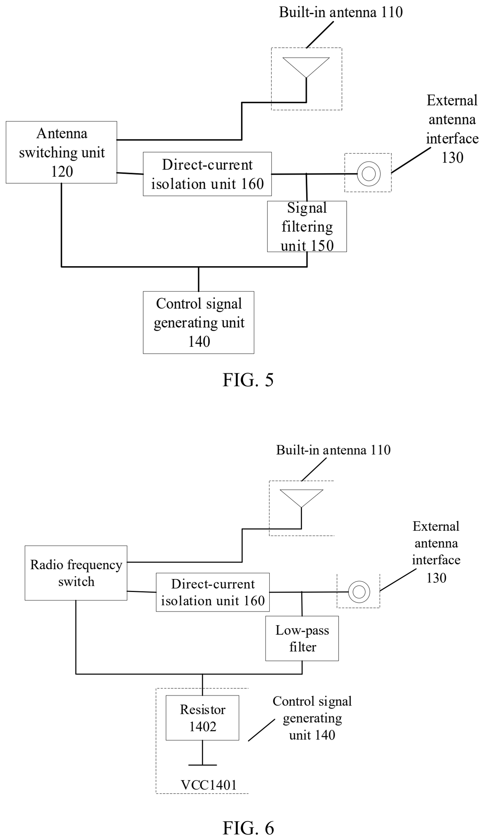

In some embodiments, as shown in FIG. 6, which is a fifth structural schematic diagram of an antenna switching circuit according to embodiments of the present disclosure, the antenna switching unit 120 may be a radio frequency switch.

The radio frequency switch is a device specially designed for switching radio frequency signals. When using the radio frequency switch to process radio frequency signals, the characteristics of the radio frequency signals, such as insertion loss, isolation, return loss, etc., are considered.

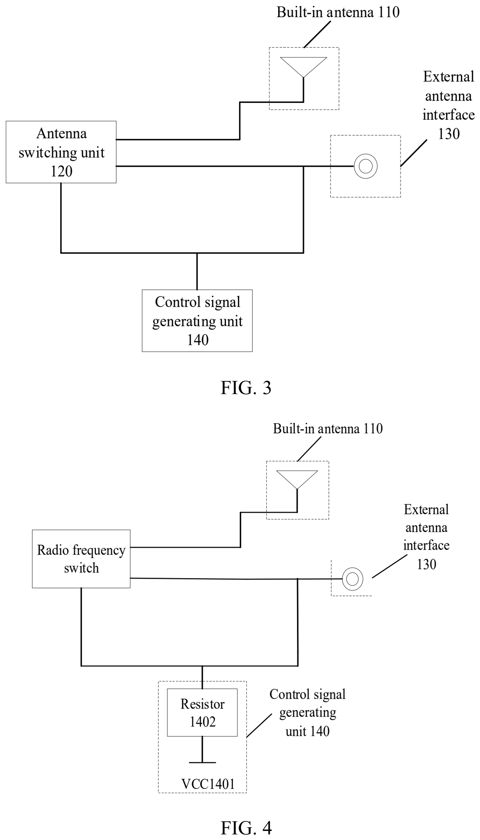

Please refer to FIG. 3, which is a second structural schematic diagram of an antenna switching circuit according to embodiments of the present disclosure.

In some embodiments, as shown in FIG. 3, the antenna switching circuit further includes: a control signal generating unit 140, where an output port of the control signal generating unit 140 is connected to a third port of the antenna switching unit 120 and the external antenna interface 130 respectively.

The control signal generating unit 140 is configured to input different control signals to the antenna switching unit 120 in different linking states of the external antenna.

The control signal generating unit 140 may be selected according to the accuracy, stability, and immunity to external interferences of control signals. For example, a simple resistor divider circuit, a comparator-based circuit or a microcontroller (MCU) controlled circuit can be used.

In some embodiments, the control signal generating unit 140 inputs a high-level signal to the antenna switching unit 120 when the external antenna is not linked, and the control signal generating unit 140 inputs a low-level signal to the antenna switching unit 120 when the external antenna is linked. The antenna switching unit 120 connects with the built-in antenna 110 under the control of the high-level signal, and the antenna switching unit 120 connects with the external antenna under the control of the low-level signal.

In this embodiment, the electrical characteristics of the specially designed external antenna are used, so as to realize automatic detection of the linking state of the external antenna and switching control between the external antenna and the built-in antenna, by which the users do not need to manually perform complex antenna switching operations at the software level. When the external antenna is linked to the device, the antenna switching circuit automatically detects and switches to the external antenna, and when the external antenna is pulled out, the antenna switching circuit automatically switches back to the built-in antenna, which greatly improves the user experience and makes the use of the device more convenient. In addition, the external antenna usually has a better gain and directivity, so in scenarios where a better signal coverage is required, the linked external antenna can enhance signal strength and expand coverage area, and when the external antenna is not required, the built-in antenna can meet basic communication requirements while maintaining the simplicity of the device appearance. Compared with the antenna switching solution relying on manual operations of the users or complex software configurations, the automatic switching mechanism based on hardware circuits reduces the possibility of antenna switching failure caused by user misoperations or software failure, and improves the reliability and stability of the wireless network system.

Please refer to FIG. 4, which is a third structural schematic diagram of an antenna switching circuit according to embodiments of the present disclosure.

In some embodiments, as shown in FIG. 4, the control signal generating unit 140 may include a power supply VCC1401 and a resistor 1402. A first end of the resistor 1402 is connected to the power supply VCC1401, a second end of the resistor 1402 is an output port of the control signal generating unit 140, and the second end of the resistor 1402 is connected to the third port of the antenna switching unit 120 and the external antenna interface 130 respectively.

Please refer to FIG. 5, which is a fourth structural schematic diagram of an antenna switching circuit according to embodiments of the present disclosure.

In some embodiments, as shown in FIG. 5, the antenna switching circuit may further include a signal filtering unit 150, and the external antenna interface 130 is connected to the second end of the resistor 1402 via the signal filtering unit 150.

In some embodiments, as shown in FIG. 6, the signal filtering unit 150 may be a low-pass filter.

Since the control signal is usually a low-frequency signal (such as a direct-current or low-frequency pulse signal), and the radio frequency signal is a high-frequency signal, the low-pass filter allows the low-frequency control signal to pass through while attenuating the high-frequency radio frequency signal. The control signal output by the control signal generating unit 140 includes the low-frequency control signal and a possibly mixed radio frequency signal. The low-pass filter attenuates the radio frequency signal, allowing only the low-frequency control signal to reach the antenna switching unit 120, thereby preventing the radio frequency signal from interfering with the processing of the control signal.

In some embodiments, as shown in FIG. 5, the antenna switching circuit may further include a direct-current isolation unit 160, and the external antenna interface 130 is connected to the second port of the antenna switching unit 120 via the direct-current isolation unit 160.

The direct-current isolation unit 160 is used to prevent the direct-current signal from entering the radio frequency link, because the radio frequency signal is alternating-current signal and the direct-current signal may affect the performance of the radio frequency front end or the antenna. When the external antenna is linked, there may be a direct-current component at the external antenna interface 130, and the direct-current isolation unit 160 can block the direct-current signal and only allow the radio frequency signal to pass through.

In some embodiments, the type of the external antenna includes any one of the following: a dipole antenna, a monopole antenna, an inverted-F antenna, an antenna with a balun structure, a single antenna, and an array antenna of N units, N being an integer greater than 1.

It should be noted that the design of the external antenna is not limited to the antenna types mentioned in the above embodiments of the present disclosure. Any external antenna design that can achieve the plug-and-play purpose of the external antenna of the present disclosure can be adopted in the embodiments of the present disclosure, which is not limited in the present disclosure.

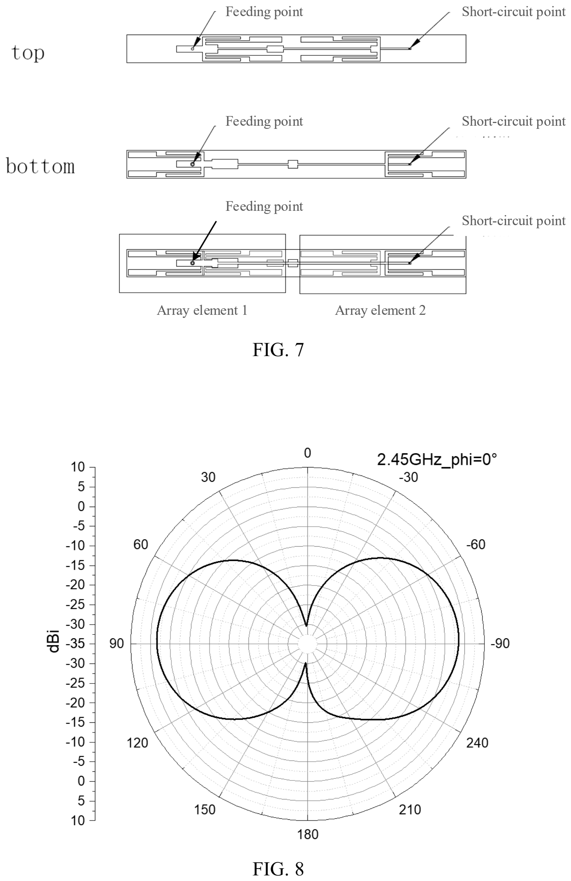

Please refer to FIG. 7, which is a second structural schematic diagram of an external antenna according to embodiments of the present disclosure.

In some embodiments, as shown in FIG. 7, the view corresponding to "top" is the top view of the external antenna, and the view corresponding to "bottom" is the bottom view of the external antenna. The external antenna can be a dipole antenna of two units, including array element 1 and array element 2 at the symmetrical positions of the external antenna, one unit is provided with a feeding point, and the other unit is provided with a short-circuit point (e.g., the ground point as mentioned above) at a corresponding position. The special design of the feeding point and the short-circuit point enables the external antenna to form a complete direct-current loop without affecting its radiation performance.

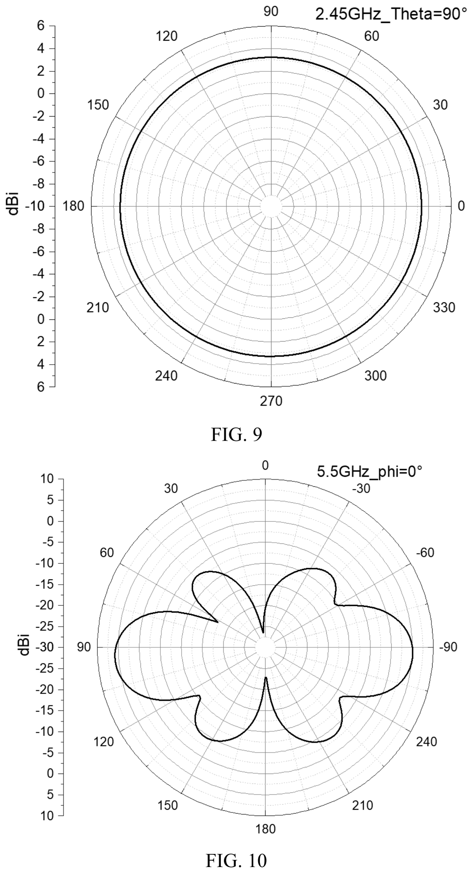

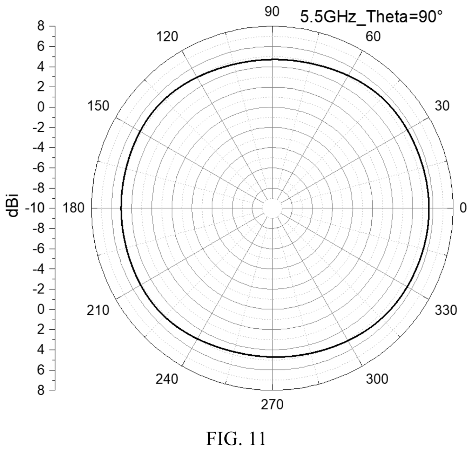

Please refer to FIGS. 8 to 11, which are all antenna directivity diagrams of the external antenna according to the embodiments of the present disclosure. Compared with the conventional antenna array, the external antenna which is designed using the dipole array of two units with a short-circuit structure and is provided by the embodiments of the present disclosure adds a short-circuit point at its end, so that it forms a complete direct-current loop, and the added short-circuit point does not affect the radiation performance of the external antenna itself, the horizontal omnidirectional radiation effect is good, and the gain can reach 3dBi in the 2G band and 5dBi in the 5G band, effectively improving the signal coverage of the wireless network devices.

The antenna switching circuit provided by the present disclosure includes: a built-in antenna 110 connected to a first port of the antenna switching unit 120; and an external antenna interface 130 connected to a second port of the antenna switching unit 120, wherein the external antenna interface 130 is used for linking an external antenna, and the external antenna has a ground point and a feed point 210 between which a direct-current loop is formed; the antenna switching unit 120 is configured to connect with one of the built-in antenna 110 and the external antenna under the control of different control signals. When the external antenna is linked, the direct-current loop formed between the feeding point and the ground point will change the potential distribution in the circuit. This change in the potential distribution will generate different control signals and the different control signals can be input to the antenna switching unit 120. According to these different control signals, the antenna switching unit 120 will automatically select the connection with the built-in antenna 110 or the external antenna, in which antenna selection is made through the control and switching of electrical signals in a pure hardware manner, without manual switching by the users. In addition, since the change in the control signal is caused by the direct-current loop formed between the feed point 210 and the ground point when the external antenna is linked, when a foreign object with a matched shape is inserted into the external antenna interface 130, the foreign object usually cannot form an effective direct-current loop as the external antenna. Therefore, the potential distribution of the circuit will not undergo the specific change as when the external antenna is linked, and the antenna switching unit 120 will not receive the same control signal as when the external antenna is linked. In this way, the antenna switching unit 120 will not mistakenly identify the foreign object as the external antenna and perform switching operations and will not rely on mechanical identification, thereby achieving the technical effect of improving the convenience and accuracy of antenna switching. In addition, the antenna switching circuit provided by the embodiments of the present disclosure has a simple circuit design and is easy to implement, does not affect the performance of the external antenna module, and does not increase the size of the external antenna module.

Embodiments of the present disclosure also provide an antenna switching method, which is applied to an antenna switching unit in an antenna switching circuit, where the antenna switching circuit further includes a built-in antenna and an external antenna interface, the built-in antenna is connected to a first port of the antenna switching unit, the external antenna interface is connected to a second port of the antenna switching unit, the external antenna interface is used for linking an external antenna, the external antenna has a ground point and a feed point, and a direct-current loop is formed between the feed point and the ground point, and wherein the method includes: selecting one of the built-in antenna and the external antenna to connect in response to different control signals.

For example, in response to a first control signal (e.g., a high-level control signal), the built-in antenna is selected to connect with the antenna switching unit; and in response to a second control signal (e.g., a low-level control signal) different from the first control signal, the external antenna is selected to connect with the antenna switching unit.

In the present disclosure, the terms "first", "second", and "third" are used for descriptive purposes only and cannot be understood as indicating or implying relative importance; the term "a plurality" or "multiple" refers to two or more, unless expressly limited otherwise. The terms "install", "couple", "connect", "fix" and other terms and/or their variants should be understood in a broad sense. For example, "coupling" can be a fixed coupling, a detachable coupling, or an integral coupling; "connection" can be a direct connection or indirect connection through an intermediary. For those of ordinary skill in the art, the specific meanings of the above terms in the present disclosure can be understood according to the specific circumstances.

In the description of the present disclosure, it should be understood that the orientations or positional relationships indicated by the terms "upper", "lower", "left", "right", "front", "rear", etc. are based on the orientations shown in the drawings, which is only for the convenience of describing the present disclosure and simplifying the description, rather than indicating or implying that the device or unit referred to must have a specific direction, or must be constructed and operated in a specific orientation. Therefore, they cannot be understood as a limitation of the present disclosure.

In the description of this specification, the description of the terms "an embodiment", " embodiments", "specific embodiments", etc. means that the specific features, structures, materials or characteristics described in connection with the embodiment or example are included in the present disclosure in at least one embodiment or example. In this specification, schematic expressions of the above terms do not necessarily refer to the same embodiment or example. Furthermore, the specific features, structures, materials or characteristics described may be combined in any suitable manner in any one or more embodiments or examples.

The above are only specific implementations of the present disclosure, but the protection scope of the present disclosure is not limited thereto. Any person familiar with the technical field can easily think of changes or substitutions within the technical scope disclosed in the present disclosure, which should be covered in within the protection scope of the present disclosure. Therefore, the protection scope of the present disclosure should be subject to the protection scope of the claims.

## Claims

1. An antenna switching circuit, comprising:
a built-in antenna connected to a first port of an antenna switching unit;
an external antenna interface connected to a second port of the antenna switching unit, wherein the external antenna interface is used for linking an external antenna, and the external antenna has a ground point and a feed point between which a direct-current loop is formed; and
the antenna switching unit configured to connect with one of the built-in antenna and the external antenna under a control of different control signals.

2. The antenna switching circuit according to claim 1, **characterized in that**,
the antenna switching unit is specifically configured to connect with the built-in antenna under the control of a high-level signal, and to connect with the external antenna under the control of a low-level signal.

3. The antenna switching circuit according to claim 1 or 2, **characterized in that** a type of the external antenna includes any one of: a dipole antenna, a monopole antenna, an inverted-F antenna, an antenna with a balun structure, a single antenna, and an array antenna of N units, N being an integer greater than 1.

4. The antenna switching circuit according to claim 1 or 2, **characterized in that** the external antenna is a dipole antenna of two units, and at symmetrical positions of the external antenna, one unit is provided with the feeding point, and the other unit is provided with a short-circuit point at a corresponding position.

5. The antenna switching circuit according to any preceding claim, **characterized in that** the antenna switching circuit further comprises:
a control signal generating unit including a power supply and a resistor, wherein a first end of the resistor is connected to the power supply, and a second end of the resistor is respectively connected to a third port of the antenna switching unit and the external antenna interface;
wherein the control signal generating unit is configured to input the different control signals to the antenna switching unit under different linking states of the external antenna.

6. The antenna switching circuit according to claim 5, **characterized in that** the antenna switching circuit further includes a signal filtering unit, and the external antenna interface is connected to the second end of the resistor via the signal filtering unit.

7. The antenna switching circuit according to claim 6, **characterized in that** the signal filtering unit is a low-pass filter.

8. The antenna switching circuit according to any preceding claim, **characterized in that** the circuit further includes a direct-current isolation unit, and the external antenna interface is connected to the second port of the antenna switching unit via the direct-current isolation unit.

9. The antenna switching circuit according to any preceding claim, **characterized in that** the antenna switching unit is a radio frequency switch.

10. An antenna switching method applied to an antenna switching unit in an antenna switching circuit, wherein the antenna switching circuit further includes a built-in antenna and an external antenna interface, the built-in antenna is connected to a first port of the antenna switching unit, the external antenna interface is connected to a second port of the antenna switching unit, the external antenna interface is used for linking an external antenna, and the external antenna has a ground point and a feed point between which a direct-current loop is formed, and wherein the method includes:
selecting one of the built-in antenna and the external antenna to connect in response to different control signals.

11. An antenna system, comprising:
an antenna switching circuit as claimed in claim 1; and
an external antenna.
